Europäisches Patentamt

European Patent Office

Office européen des brevets

(19)

(11) **EP 0 612 643 B1**

(12) **EUROPÄISCHE PATENTSCHRIFT**

(45) Veröffentlichungstag und Bekanntmachung des Hinweises auf die Patenterteilung:
**15.10.1997 Patentblatt 1997/42**

(51) Int. Cl.$^6$: **B60R 21/00**, G07C 5/00

(21) Anmeldenummer: **94102437.4**

(22) Anmeldetag: **17.02.1994**

(54) **Vorrichtung zur Überwachung eines sicherheitsrelevanten Elements eines Kraftfahrzeugs**

Monitoring device for a safety related vehicle part

Dispositif de surveillance d'un élément de sécurité dans un véhicule automobile

(84) Benannte Vertragsstaaten:
**DE ES FR GB IT SE**

(30) Priorität: **19.02.1993 DE 4305172**

(43) Veröffentlichungstag der Anmeldung:
**31.08.1994 Patentblatt 1994/35**

(73) Patentinhaber: **AUTENT INGENIEURGESELLSCHAFT FÜR AUTOMOBILTEILE-ENTWICKLUNG mbH D-65468 Trebur-Astheim (DE)**

(72) Erfinder: **Hager, Harald**
**D-63853 Mömlingen (DE)**

(74) Vertreter: **Preissner, Nicolaus, Dipl.-Ing.**
**Patentanwälte**
**Michelis & Preissner,**
**Haimhauser Strasse 1**
**80802 München (DE)**

(56) Entgegenhaltungen:
**EP-A- 0 092 123**  **US-A- 4 733 361**
**US-A- 5 019 760**

**Beschreibung**

Die Erfindung betrifft ein Airbagsystem mit einer Vorrichtung zur Bestimmung und Anzeige der temperaturabhängigen Alterungsgrenze eines Airbagsystemteils.

Aus der EP-A-0 092 123 ist eine Vorrichtung zur Überwachung eines sicherheitsrelevanten Elements eines Kraftfahrzeugs bekannt, mit einem elektronischen Rechner und mit mindestens einem Meßsignalgeber zum Erfassen der Temperatur oder Umgebungstemperatur des sicherheitsrelevanten Elements, wobei der Rechner ausgebildet ist, das Temperaturmeßsignal zu empfangen und aus dem zeitlichen Verlauf des Temperaturmeßsignals eine Alterung des sicherheitsrelevanten Elements zu ermitteln. Nach diesem Stand der Technik kann im Hydrauliksystem einer Baumaschine u.a. die Öltemperatur eines Arbeitszylinders während des Betriebs der Baumaschine erfaßt werden, um die temperaturabhängige Verringerung der Lebensdauer etwa einer Öldichtung zu ermitteln und dadurch Unfällen und Stillstandszeiten vorzubeugen.

Ferner bekannt sind Bordcomputer für Kraftfahrzeuge, bei denen etwa die durch Temperatur und Drehzahl gegebene Verschleißbelastung des (Verbrennungs- oder Elektro)-Motors erfaßt wird, um Wartungsintervalle für das Kraftfahrzeug nicht einfach nach zurückgelegten Kilometern, sondern nach tatsächlicher Beanspruchung zu bestimmen und anzuzeigen. (Ein Fahrzeugmotor sei hierbei als sicherheitsrelevantes Element anzusehen, was im Zusammenhang mit Servolenkung, Bremskraftverstärkung, Überholmanövern etc. berechtigt ist). Ein Fahrkilometer bei gleichmäßiger Autobahnfahrt mit mittlerer Drehzahl wird von solchen Bordcomputern geringer gewichtet als ein Fahrkilometer in niedrigen Gängen bei hoher Drehzahl. Beschleunigungskilometer zählen unter Umständen mehrfach. Das Ende des in Kilometern ausgedrückten Norm-Intervalls zwischen zwei Kraftfahrzeuginspektionen wird dadurch je nach Fahrweise erst später bzw. schon früher als bei einfacher Kilometerzählung erreicht.

Daneben werden von solchen Bordcomputern auch Wartungsintervalle überwacht, die in Zeitgrößen ausgedrückt werden, zum Beispiel 12-Monatsfristen für Jahresinspektionen. Diese Überwachung ist erforderlich, weil z.B. bestimmte Betriebsstoffe unabhängig vom tatsächlichen Einsatz des Kraftfahrzeugs auf jeden Fall nach vorgegebenen Zeitspannen gewechselt werden sollen, z.B. Motoröl nach einem Jahr, Brems- und Kühlflüssigkeit nach zwei Jahren, da diese Stoffe auf jeden Fall - selbst bei Stillstand des Fahrzeugs - altern (z.B. oxidieren oder Wasser aufnehmen) und dadurch im ungünstigsten Fall ihre Funktionen nicht mehr erfüllen. Die genannten Zeitspannen werden herkömmlicherweise z.B. durch einfache Zählung regelmäßiger Impulse, die etwa aus den Schwingungen eines Quarzkristalls abgeleitet werden, gemessen.

Die Alterung eines Elements hängt aber nicht nur von der verstreichenden Zeit, sondern auch von der physikalischen Belastung des Elements ab. Für den Fall einer Temperaturbelastung ist ein mathematischer Zusammenhang zwischen Belastung und Alterung als theoretische Formel bekannt, nämlich in Form der Arrhenius-Gleichung, wie sie weiter unten in der näheren Beschreibung eines Ausführungsbeispiels ausgewertet wird. In der bisherigen Praxis des Kraftfahrzeugbaus werden fortlaufende, zeitabhängige Alterungsprozesse jedoch meist auf reiner Zeitbasis überwacht, entweder weil eine regelmäßige (z.B. jährliche oder zweijährliche) Auswechslung eines betroffenen Elements wirtschaftlich hinnehmbar und sicherheitstechnisch ausreichend ist, oder weil die Alterung trotz physikalischer Belastung so langsam erfolgt, daß die Lebensdauergrenze des betroffenen Elements gar nicht unter die Nutzungsdauer des Kraftfahrzeugs sinkt.

Bei aufwendigen, teuren Elementen, die sicherheitsrelevant sind und einer nicht vernachlässigbaren Alterung unterliegen, wirft eine vorsorgliche Erneuerung in regelmäßigen kurzen Zeitabständen jedoch wirtschaftliche Probleme auf, während eine in großen Zeitabständen erfolgende Erneuerung zwar weniger aufwendig, dafür aber sicherheitstechnisch bedenklich ist.

Aufgabe der Erfindung ist daher die Bereitsstellung eines Airbagsystems mit einer Vorrichtung zum Überwachen eines sicherheitsrelevanten Elements eines Kraftfahrzeugs, die es erlaubt, ein teures sicherheitsrelevantes Element, das einer nicht vernachlässigbaren Alterung unterliegt, ohne Einbuße an Sicherheit erst nach einer möglichst langen Zeitspanne auszuwechseln. Insbesondere soll diese Überwachung auf ein sicherheitsrelevantes System erstreckt werden, dessen Alterungsanfälligkeit bisher noch nicht erkannt worden war.

Erfindungsgemäß wird diese Aufgabe durch die im Anspruch 1 angegebenen Merkmale gelöst.

Es ist eine wichtige, der Erfindung zugrunde liegende Erkenntnis, daß die Alterung eines Airbags deutlich von der Temperatur abhängt, der er ausgesetzt ist, und daß die Lebensdauergrenze des Airbags, insbesondere seines normalerweise zusammengefalteten Hüllmaterials, unter dem Einfluß hoher Temperatur weit unter die Nutzungsdauer eines Kraftfahrzeugs, in das er eingebaut ist, absinken kann, so daß sein sicheres Funktionieren nicht über die gesamte Nutzungsdauer des Kraftfahrzeugs gewährleistet ist. Wenn man bedenkt, welch hohe Temperaturen im Inneren eines Kraftfahrzeugs und insbesondere im Inneren des einen Airbag aufnehmenden, normalerweise dunkel gefärbten Lenkrades unter Sonneneinstrahlung - auch beim Parken, d.h. im Fahrzeugstillstand - auftreten können, wird ersichtlich, daß dieses Problem von großer Tragweite ist und den Fachmann vor das Dilemma stellt, daß einerseits eine häufige vorsorgliche Auswechslung des Airbags wirtschaftlich sehr aufwendig ist, andererseits aber eine unterlassene oder verzögerte Auswechslung unter Sicherheitsgesichtspunkten unverantwortlich sein kann.

Durch die erfindungsgemäßen Maßnahmen wird der Vorteil erzielt, daß die Lebensdauergrenze des sicherheitsrelevanten Airbagsystems in einem Kraftfahrzeug temperaturabhängig genau ermittelt wird und daher - im Gegensatz zu einer reinen Zeitmessung - diese Grenze ohne überdimensionierten Sicherheitsabschlag und trotzdem ohne Einbuße an Sicherheit voll ausgenutzt werden kann. Dadurch wird eine maximale wirtschaftliche Nutzung des sicherheitsrelevanten Airbagsystemteils erreicht, ohne dessen sichere Verfügbarkeit zu gefährden. Die temperaturabhängige Ermittlung der wahren Alterung erlaubt die volle und trotzdem risikolose Ausnutzung der individuellen Lebensdauergrenze des Airbags.

Zur praktischen Ermittlung der Alterung des überwachten Airbagsystemteils - sei seines Stoffmaterials oder seines Gastreibsatzes - ist der Rechner vorzugsweise ausgebildet, die Länge von Lebenszeitintervallen des Airbagsystemteils als Funktion des jeweils anliegenden, die augenblickliche Temperaturbelastung angebenden Meßsignals zu gewichten und aufzuintegrieren. Dies bedeutet beispielsweise, daß ein Zeitintervall mit einer Temperaturbelastung unterhalb einer bestimmten Nenn-Temperatur, für welche die Nenn-Lebensdauer eines Airbagelements definiert ist, in die Alterung des Elements mit einem geringeren Wert eingeht, als es der Länge des Intervalls entspräche. Umgekehrt altert das Element in einem Zeitintervall mit Temperaturbelastung oberhalb der Nenn-Temperatur um einen größeren Wert, als es der Länge des Intervalls entspräche. Die fortlaufend ermittelte Alterung wird jeweils mit einer Nenn-Lebensdauergrenze, die für die Nenn-Temperatur gilt, verglichen.

Die Gewichtungsfaktoren für die Lebenszeitintervalle werden vorzugsweise in Abhängigkeit vom jeweils anliegenden Meßsignal aus einer charakteristischen Kennlinie, insbesondere Arrhenius-Formel, ermittelt, deren Konstanten im Speicher des Rechners hinterlegt sind. Die Gewichtungsfaktoren für die Lebenszeitintervalle können aber auch als Funktion des Meßsignals in Tabellenform im Speicher des Rechners hinterlegt sein. Die für das zu überwachende Element geltenden Konstanten bzw. Tabellenwerte werden vorab zum Beispiel empirisch ermittelt und dann in den Speicher des Rechners einprogrammiert. Hierauf wird in der Beschreibung eines Ausführungsbeispiels näher eingegangen.

Als Rechner kann vorteilhaft ein für das Kraftfahrzeug eventuell ohnehin vorgesehener Bordcomputer mitgenutzt werden. Bei Nahen oder Erreichen der Lebensdauergrenze des überwachten sicherheitsrelevanten Airbagsystemteils gibt der Rechner vorzugsweise ein Warnsignal aus. Darüber hinaus kann zum Beispiel vorgesehen werden, daß der Rechner bei Erreichen der Lebensdauergrenze ein Sperrsignal ausgibt, das die Anzahl der darauffolgenden Inbetriebsetzungen des Kraftfahrzeugs und/oder dessen Geschwindigkeit beschränkt, um dem durch Erreichen der Lebensdauergrenze des sicherheitsrelevanten Airbagsystemteils eingetretenen Sicherheitsrisiko Rechnung zu tragen.

Nachstehend wird die Erfindung anhand eines zeichnerisch veranschaulichten Ausführungsbeispiels näher erläutert. Es zeigt

Fig. 1            eine graphische Darstellung empirisch ermittelter Alterungsdaten für ein typisches Airbagmaterial;

Fig. 2            eine linearisierte Darstellung des Zusammenhangs zwischen Temperatur und Alterung;

Fig. 3            einen Alterungsverlauf eines Airbagstoffs im Laufe einer variablen starken Temperaturbelastung über 24 Stunden; und

Fig. 4a und 4b    eine vollständige Liste der numerischen Berechnung des in Fig. 3 gezeigten Alterungsverlaufs.

An einem in einem Kraftfahrzeug eingebauten Airbagsystem wird die temperaturabhängige Alterung eines sicherheitsrelevanten Systemteils, in diesem Fall des Airbagstoffs, näher untersucht.

Die Alterungsformel nach Arrhenius lautet:

$$K = A * e^{**}(-Ea/RT) \tag{1}$$

mit

K     = Geschwindigkeit der Alterung/Eigenschaftsänderung,
A     = Konstante,
Ea    = Aktivierungsenergie,
R     = universelle Gaskonstante,
T     = Temperatur in Kelvin,
*     = Multiplikationsoperator,
**    = Exponentiationsoperator.

Die Formel erlaubt es insbesondere, für ein gegebenes Element/Material zunächst Alterungsversuche bei erhöhter Temperatur und dadurch mit erhöhter Geschwindigkeit durchzuführen, um die Konstanten der Gleichung relativ rasch empirisch zu ermitteln. Diese ermöglichen dann für niedrigere Temperaturen eine rasche Berechnung der zugehörigen langsameren Alterungen, deren experimentelle Ermittlung sehr langwierige Versuche erfordern würde.

Für einen typischen Airbagstoff wurden bei hohen Temperaturen folgende Laborergebnisse hinsichtlich der Alterung ermittelt, wobei die der Temperaturangabe jeweils zugeordnete Zeitangabe bedeutet, daß bei der gegebenen Temperatur eine Eigenschaftsänderung des Airbagstoffs um 30% (festgelegt) nach der angegebenen Zahl von Tagen auftrat:

| Temperatur | (°C) | 120 | 105 | 90 | 85 |
|---|---|---|---|---|---|
| | (K) | 393 | 378 | 363 | 358 |
| Zeit (Tage) | | 15,5 | 33,5 | 72 | 96 |

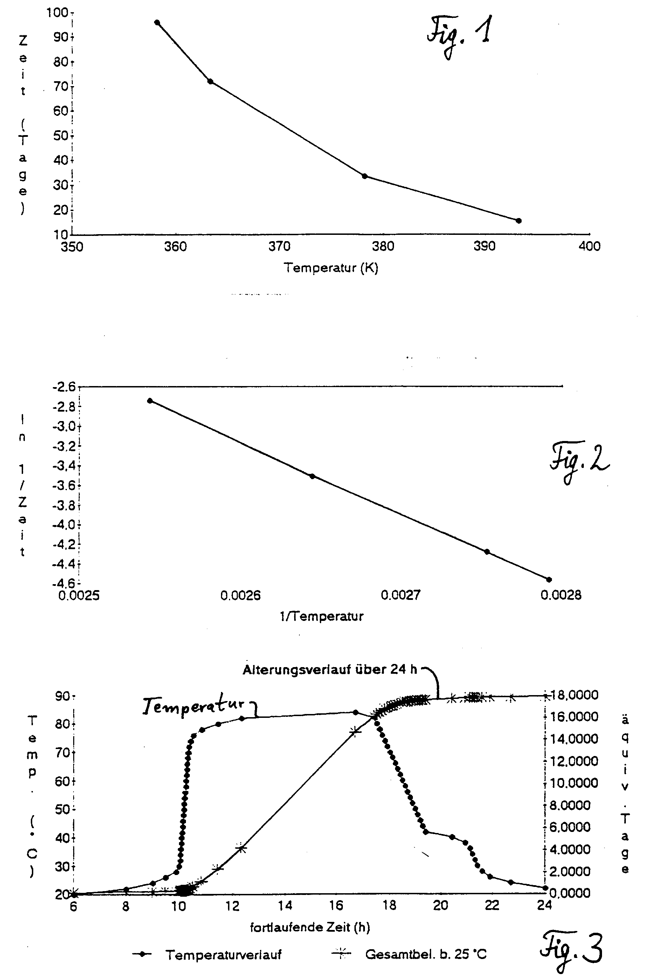

Eine graphische Darstellung dieser Wertepaare ist Fig. 1 entnehmbar.

Durch Umformung der Gleichung (1) erhält man:

$$\ln 1/t = A' - Ea/R * 1/T \qquad (2)$$

mit t = Zeit und A' = Konstante.

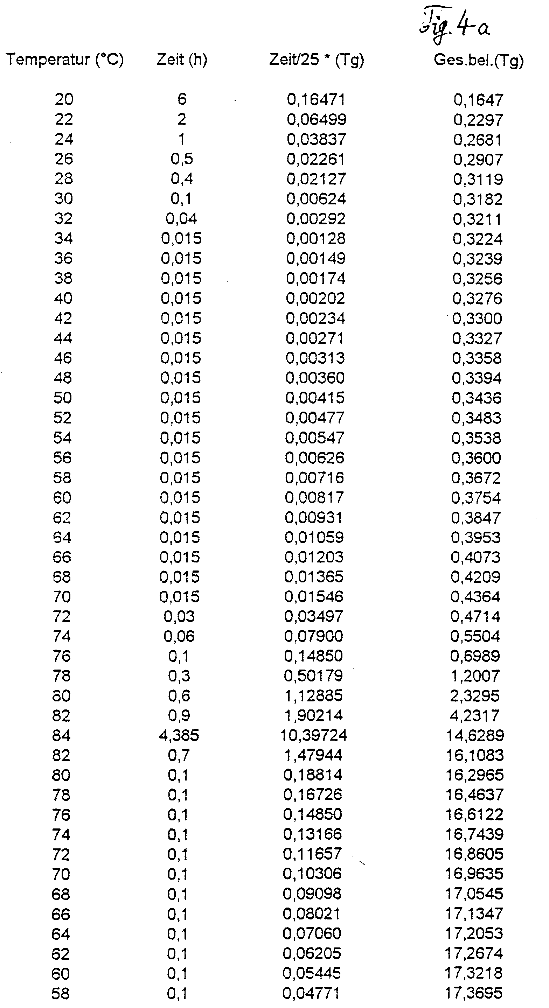

Setzt man $y = \ln 1/t$ und $x = 1/T$, hat man somit eine lineare Gleichung, die in Fig. 2 graphisch dargestellt ist.

A' und Ea/R werden durch statistische Regressionsrechnung ermittelt. Bei einem Korrelationskoeffizienten von 0,9998 ergibt sich für A' = 15,8 und für Ea/R = 7294 .

Durch Umformung der Gleichung (2) läßt sich die Lebensdauergrenze wie folgt vorausberechnen:

$$t = e^{**}[-(A' - Ea/R * 1/T)] \qquad (3)$$

Bezogen auf 25°C ergibt sich t = 5793 Tage = 15,8 Jahre. Zum Vergleich: bei 30°C gilt t = 10,6 Jahre. Bei noch höheren Temperaturen kann also durchaus die Lebensdauergrenze eines Airbags die gewöhnliche Nutzungsdauer eines Kraftfahrzeugs unterschreiten.

Die temperaturabhängige, wahre Alterung eines Airbags kann nun beispielsweise über 24 Stunden hinweg wie folgt fortlaufend überwacht werden.

Ein Mikroprozessor als Rechner registriert mit Hilfe einer das eingebaute Airbagmodul abtastenden Temperatursonde zusammengehörige Wertepaare von Temperatur- und Zeit-Intervallen. Zum Beispiel erfaßt der Rechner jeweils die Länge eines Zeitintervalls, das verstreicht, bis es zu einer Temperaturänderung von 2°C kommt. Die erfaßte Länge des Zeitintervalls wird dann in Abhängigkeit von der jeweils herrschenden Temperatur gewichtet und zu den bereits vorher erfaßten und gewichteten Intervall-Längen aufaddiert, so daß fortlaufend das wahre Alter des überwachten Elements rechnerisch zur Verfügung steht und mit der Nenn-Lebensdauergrenze, die für eine bestimmte Nenn-Temperatur (z.B. 25°C) gilt, verglichen werden kann.

Die Gewichtung eines Zeitintervalls t in Abhängigkeit von der jeweils herrschenden Temperatur T erfolgt vorzugsweise durch Umrechnung des Zeitintervalls auf die theoretische, äquivalente Zeitspanne, die verstreichen müßte, um eine gleich starke Alterung bei Nenn-Temperatur zu bewirken. Die Nenn-Temperatur betrage z.B. 25°C; für die auf diese Temperatur umgerechnete theoretische, äquivalente Zeitspanne $t_{25}$ gilt dann aufgrund Gleichung (3) die Beziehung

$$t_{25} = t * e^{**}[Ea/R * (1/298 - 1/T)]$$

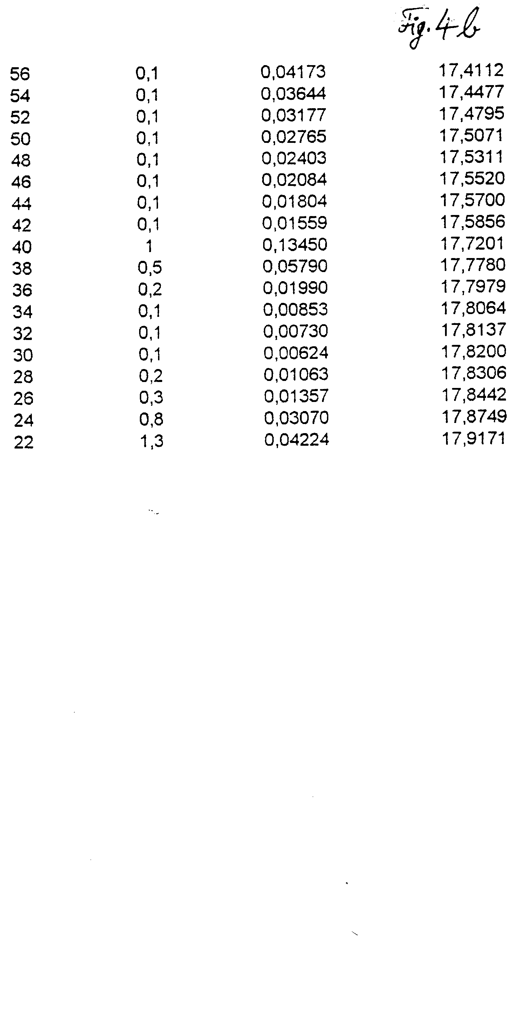

Es wird nun Fig. 3 Bezug genommen. Darin zeigt die Kurve mit den runden Meßpunkten einen als Beispiel angenommenen 24-stündigen Temperaturverlauf eines in einem Lenkrad eingebauten Airbagmoduls. Auf der Abszisse ist die Tageszeit und auf der linken Ordinate die Temperatur (in °C) aufgetragen. Zwischen null Uhr und zehn Uhr morgens liegt die Temperatur unter 30°C, dann steigt sie unter Sonneneinstrahlung für ein z.B. geparktes Kraftfahrzeug rasch an und erreicht in der Spitze über 80°C. Erst ab 18:00 Uhr fällt die Temperatur wieder ab. Der genaue Verlauf der Temperatur - in 2°-Schritten - und die zugehörigen Zeitintervall-Längen sind aus der fortlaufenden numerischen Liste gemäß Fig. 4 zu entnehmen (Spalten 1 und 2).

Spalte 3 der Liste nach Fig. 4 gibt zu jedem Temperatur/Zeit-Paar die äquivalente, auf Nenn-Temperatur (25°C) umgerechnete Alterungszeit an. Zum Beispiel entsprechen sechs Stunden bei 20°C nur einer äquivalenten Alterung von 0,16471 Tagen = 3,95304 Stunden. Andererseits entsprechen 4,385 Stunden bei 84°C einer äquivalenten Alterung von 10,39724 Tagen.

Spalte 4 der Liste nach Fig. 4 summiert alle äquivalenten Alterungszeiten auf, und am Ende dieses einen, für den Airbag aber sehr belastungsreichen Tages resultiert eine äquivalente Alterung von 17,9171 Tagen. Die verbleibende Nenn-Lebensdauer verkürzt sich entsprechend stark.

Der in Fig. 4 numerisch aufgelistete Alterungsverlauf ist in Fig. 3 auch graphisch dargestellt (sternförmige Kurvenpunkte). Über der Tageszeit ist auf der rechten Ordinate die äquivalente Alterung (in Tagen) aufgetragen.

Nach dem gleichen Prinzip kann durch eine entsprechende Meßsonde das Alterungsverhalten des Gasgenerators, d.h. des Explosivtreibsatzes für das Airbagsystem, überwacht werden. Das spezifische Alterungsverhalten des Gasgenerators ist zu diesem Zweck gesondert zu ermitteln und die sich ergebenden Konstanten in den Rechner einzuspeisen. Die Berechnungen basieren dabei auf den gleichen Formeln.

Wie ersichtlich, können klimatische Einflüsse eine große Auswirkung auf die Alterung von Airbagkomponenten haben. Die Erfindung bietet den Vorteil, diese Einflüsse berechenbar zu berücksichtigen; dadurch werden Unsicherheiten ausgeschaltet und dabei wirtschaftliche Gesichtspunkte dennoch gewahrt.

**Patentansprüche**

1. Airbagsystem mit einer Vorrichtung zur Bestimmung und Anzeige der temperaturabhängigen Alterungsgrenze eines Airbagsystemteils, mit einer Temperatursonde zum Erfassen der Temperatur oder Umgebungstemperatur des Airbagsystemteils und einem elektronischen Rechner, wobei der Rechner dazu ausgebildet ist, ein Meßsignal der Temperatursonde fortlaufend zu empfangen, aus dem zeitlichen Verlauf des Meßsignals fortlaufend eine temperaturabhängige Alterung des Airbagsystemteils zu ermitteln, die ermittelte Alterung mit einer vorgegebenen Alterungsgrenze des Airbagsystemteils zu vergleichen und spätestens bei Erreichen der Alterungsgrenze ein Ausgangssignal abzugeben.

2. Airbagsystem nach Anspruch 1, dadurch gekennzeichnet, daß der Rechner ausgebildet ist, das Temperaturmeßsignal auch während Unterbrechungen des Kraftfahrzeugbetriebs zu empfangen und zu verarbeiten.

3. Airbagsystem nach einem der vorhergehenden Ansprüche, dadurch gekennzeichnet, daß die Temperatursonde ausgebildet ist, die Temperatur oder Umgebungstemperatur des Airbagstoffs zu erfassen;

4. Airbagsystem nach einem der vorhergehenden Ansprüche, dadurch gekennzeichnet, daß der Rechner ausgebildet ist, die Länge von Lebenszeitintervallen des Airbagsystemteils als Funktion des jeweils anliegenden Temperaturmeßsignals zu gewichten und aufzusummieren.

5. Airbagsystem nach Anspruch 4, dadurch gekennzeichnet, daß der Rechner ausgebildet ist, die Gewichtungsfaktoren für die Lebenszeitintervalle in Abhängigkeit vom jeweils anliegenden Temperaturmeßsignal aus einer charakteristischen Kennlinie, insbesondere Arrhenius-Formel, zu ermitteln, deren Konstanten im Speicher des Rechners hinterlegt sind.

6. Airbagsystem nach Anspruch 4, dadurch gekennzeichnet, daß die Gewichtungsfaktoren für die Lebenszeitintervalle als Funktion des Temperaturmeßsignals in Tabellenform im Speicher des Rechners hinterlegt sind.

7. Airbagsystem nach einem der vorhergehenden Ansprüche, dadurch gekennzeichnet, daß der Rechner ein Bordcomputer für das Kraftfahrzeug ist.

8. Airbagsystem nach einem der vorhergehenden Ansprüche, dadurch gekennzeichnet, daß der Rechner ausgebildet ist, spätestens bei Erreichen der Lebensdauergrenze ein Warnsignal auszugeben.

9. Airbagsystem nach einem der vorhergehenden Ansprüche, dadurch gekennzeichnet, daß der Rechner ausgebildet ist, bei Erreichen der Lebensdauergrenze ein Sperrsignal auszugeben, das die Anzahl der darauffolgenden Inbetriebsetzungen des Kraftfahrzeugs und/oder dessen Geschwindigkeit beschränkt.

10. Airbagsystem nach einem der vorhergehenden Ansprüche, dadurch gekennzeichnet, daß die Temperatursonde ausgebildet ist, die Temperatur oder Umgebungstemperatur eines Gasgenerators für den Airbag zu erfassen.

**Claims**

1. An air bag system including a device for determining and indicating the temperature-relevant aging limit of an air bag system component, comprising a temperature sensor for sensing the temperature or ambient temperature of said air bag system component and an electronic computer, said computer being configured to continually receive a sensing signal of said temperature sensor, to establish continually from the time profile of said sensing signal a temperature-related aging of said air bag system component, to compare the established aging to a predetermined aging limit of said air bag system component and to output at the latest an output signal when said aging limit is attained.

2. The air bag system as set forth in claim 1, characterized in that said computer is configured to receive and to process said temperature sensing signal also during interruptions of motor vehicle operation.

3. The air bag system as set forth in any of the preceding claims, characterized in that said temperature sensor is configured to sense the temperature or ambient temperature of the air bag material.

4. The air bag system as set forth in any of the preceding claims, characterized in that said computer is configured to weight and sum up the length of lifetime intervals of said air bag system component as a function of the temperature sensing signal applied in each case.

5. The air bag system as set forth in claim 4, characterized in that said computer is configured to establish the weighting factors for said lifetime intervals as a function of the temperature sensing signal applied in each case from a characteristic curve, more particularly Arrhenius formula, the constants of which are held in the memory of the computer.

6. The air bag system as set forth in claim 4, characterized in that said weighting factors for the lifetime intervals as a function of the temperature sensing signal are held in tabular form in the memory or said computer.

7. The air bag system as set forth in any of the preceding claims, characterized in that said computer is an on-board computer for said motor vehicle.

8. The air bag system as set forth in any of the preceding claims, characterized in that said computer is configured to output a warning signal at the latest when said lifetime limit is attained.

9. The air bag system as set forth in any of the preceding claims, characterized in that said computer is configured to output a lockout signal when said lifetime limit is attained, this signal restricting the number of subsequent starting operations of said motor vehicle and/or the speed thereof.

10. The air bag system as set forth in any of the preceding claims, characterized in that said temperature sensor is configured to sense the temperature or ambient temperature of an inflator for said air bag.

**Revendications**

1. Système à airbag comprenant un dispositif pour déterminer et afficher la limite de vieillissement en fonction de la température d'une partie du système à airbag, comprenant une sonde de température pour détecter la température ou la température environnante de la partie du système à airbag, et comprenant un calculateur électronique, ledit calculateur étant réalisé afin recevoir en permanence un signal de mesure de la sonde de température, de déterminer en permanence du déroulement temporel du signal de mesure un vieillissement en fonction de la température de la partie du système à airbag, de comparer le vieillissement déterminé avec une limite de vieillissement prédéterminée de la partie du système d'airbag, et de fournir un signal de sortie au plus tard lorsque la limite de vieillissement est atteinte.

2. Système à airbag selon la revendication 1, caractérisé en ce que le calculateur est réalisé de manière à recevoir et à traiter le signal de mesure de température également pendant des interruptions du fonctionnement du véhicule.

3. Système à airbag selon l'une des revendications précédentes, caractérisé en ce que la sonde de température est réalisée de manière à détecter la température ou la température environnante du matériau de l'airbag.

4. Système à airbag selon l'une des revendications précédentes, caractérisé en ce que le calculateur est réalisé de façon à pondérer et à additionner les longueurs des intervalles de la durée de vie de la partie du système à airbag en fonction du signal de mesure de température respectivement présent.

5. Système à airbag selon la revendication 4, caractérisé en ce que le calculateur est réalisé de façon à déterminer les facteurs de pondération pour les intervalles de durée de vie en fonction du signal de mesure de température respectivement présent, à partir d'une courbe caractéristique, en particulier une formule de Arrhénius, dont les constantes sont déposées dans la mémoire du calculateur.

6.  Système à airbag selon la revendication 4, caractérisé en ce que les facteurs de pondération pour les intervalles de durée de vie sont déposés dans la mémoire du calculateur en tant que fonction du signal de mesure de température sous forme de tableau.

7.  Système à airbag selon l'une des revendications précédentes, caractérisé en ce que le calculateur est un ordinateur de bord pour le véhicule automobile.

8.  Système à airbag selon l'une des revendications précédentes, caractérisé en ce que le calculateur est réalisé de façon à délivrer un signal d'avertissement au plus tard lorsque la limite de durée de vie est atteinte.

9.  Système à airbag selon l'une des revendications précédentes, caractérisé en ce que le calculateur est réalisé de façon à délivrer un signal de blocage lorsque la limite de durée de vie est atteinte, ledit signal de blocage limitant le nombre de mises en marche postérieures du véhicule automobile et/ou sa vitesse.

10. Système à airbag selon l'une des revendications précédentes, caractérisé en ce que la sonde de température est réalisée de façon à détecter la température ou la température ambiante d'un générateur de gaz pour l'airbag.

*Fig. 1*

Z e i t   ( T a g e )

Temperatur (K)

*Fig. 2*

l n   1 / Z e i t

1/Temperatur

Alterungsverlauf über 24 h

Temperatur

T e m p .   ( ° C )

ä q u i v . T a g e

fortlaufende Zeit (h)

•— Temperaturverlauf    ✳ Gesamtbel. b. 25 °C

*Fig. 3*

*Fig. 4a*

| Temperatur (°C) | Zeit (h) | Zeit/25 * (Tg) | Ges.bel.(Tg) |
|---|---|---|---|
| 20 | 6 | 0,16471 | 0,1647 |
| 22 | 2 | 0,06499 | 0,2297 |
| 24 | 1 | 0,03837 | 0,2681 |
| 26 | 0,5 | 0,02261 | 0,2907 |
| 28 | 0,4 | 0,02127 | 0,3119 |
| 30 | 0,1 | 0,00624 | 0,3182 |
| 32 | 0,04 | 0,00292 | 0,3211 |
| 34 | 0,015 | 0,00128 | 0,3224 |
| 36 | 0,015 | 0,00149 | 0,3239 |
| 38 | 0,015 | 0,00174 | 0,3256 |
| 40 | 0,015 | 0,00202 | 0,3276 |
| 42 | 0,015 | 0,00234 | 0,3300 |
| 44 | 0,015 | 0,00271 | 0,3327 |
| 46 | 0,015 | 0,00313 | 0,3358 |
| 48 | 0,015 | 0,00360 | 0,3394 |
| 50 | 0,015 | 0,00415 | 0,3436 |
| 52 | 0,015 | 0,00477 | 0,3483 |
| 54 | 0,015 | 0,00547 | 0,3538 |
| 56 | 0,015 | 0,00626 | 0,3600 |
| 58 | 0,015 | 0,00716 | 0,3672 |
| 60 | 0,015 | 0,00817 | 0,3754 |
| 62 | 0,015 | 0,00931 | 0,3847 |
| 64 | 0,015 | 0,01059 | 0,3953 |
| 66 | 0,015 | 0,01203 | 0,4073 |
| 68 | 0,015 | 0,01365 | 0,4209 |
| 70 | 0,015 | 0,01546 | 0,4364 |
| 72 | 0,03 | 0,03497 | 0,4714 |
| 74 | 0,06 | 0,07900 | 0,5504 |
| 76 | 0,1 | 0,14850 | 0,6989 |
| 78 | 0,3 | 0,50179 | 1,2007 |
| 80 | 0,6 | 1,12885 | 2,3295 |
| 82 | 0,9 | 1,90214 | 4,2317 |
| 84 | 4,385 | 10,39724 | 14,6289 |
| 82 | 0,7 | 1,47944 | 16,1083 |
| 80 | 0,1 | 0,18814 | 16,2965 |
| 78 | 0,1 | 0,16726 | 16,4637 |
| 76 | 0,1 | 0,14850 | 16,6122 |
| 74 | 0,1 | 0,13166 | 16,7439 |
| 72 | 0,1 | 0,11657 | 16,8605 |
| 70 | 0,1 | 0,10306 | 16,9635 |
| 68 | 0,1 | 0,09098 | 17,0545 |
| 66 | 0,1 | 0,08021 | 17,1347 |
| 64 | 0,1 | 0,07060 | 17,2053 |
| 62 | 0,1 | 0,06205 | 17,2674 |
| 60 | 0,1 | 0,05445 | 17,3218 |
| 58 | 0,1 | 0,04771 | 17,3695 |

*Fig.4b*

| | | | |
|---|---|---|---|
| 56 | 0,1 | 0,04173 | 17,4112 |
| 54 | 0,1 | 0,03644 | 17,4477 |
| 52 | 0,1 | 0,03177 | 17,4795 |
| 50 | 0,1 | 0,02765 | 17,5071 |
| 48 | 0,1 | 0,02403 | 17,5311 |
| 46 | 0,1 | 0,02084 | 17,5520 |
| 44 | 0,1 | 0,01804 | 17,5700 |
| 42 | 0,1 | 0,01559 | 17,5856 |
| 40 | 1 | 0,13450 | 17,7201 |
| 38 | 0,5 | 0,05790 | 17,7780 |
| 36 | 0,2 | 0,01990 | 17,7979 |
| 34 | 0,1 | 0,00853 | 17,8064 |
| 32 | 0,1 | 0,00730 | 17,8137 |
| 30 | 0,1 | 0,00624 | 17,8200 |
| 28 | 0,2 | 0,01063 | 17,8306 |
| 26 | 0,3 | 0,01357 | 17,8442 |
| 24 | 0,8 | 0,03070 | 17,8749 |
| 22 | 1,3 | 0,04224 | 17,9171 |